# EUROPEAN PATENT APPLICATION

(11) **EP 0 939 479 A1**
(43) Date of publication of application: **01.09.1999**
(21) Application number: 99108655.4
(22) Date of filing: 09.08.1996
(51) Int. Cl.: H02K 5/173

(54) **Electric drive motor with a compound bearing assembly**

(30) Priority: 09.08.1995 JP 22476195; 09.08.1995 JP 22476295
(62) Divisional of application: 96305867.2
(71) Applicant: MINEBEA KABUSHIKI-KAISHA, Kitasaku-gun, Nagano-ken (JP)
(72) Inventor: Obara, Rikuro, c/o Minebea Kabushiki-Kaisha, Kitasaku-gun, Nagano-ken (JP)
(74) Representative: Johnstone, Douglas Ian

(57) **Abstract**

A motor is provided which includes a compound bearing assembly comprising a stepped-diameter shaft (1) having a smaller diameter portion (1b) and a larger diameter portion (1a) in the surface of which a first inner raceway groove (2a) is formed. Sleeve-like outer race rings (3,7b) with outer raceway grooves (2b,9b) in their inner surfaces and separated by a spacer sleeve (16) are disposed around the shaft. First balls (4) and second balls (8b) run between the outer raceway grooves (2b,9b) of the outer race rings (3,7b) respectively and the first inner raceway groove (2a) and a second inner raceway groove (9a) formed in an outer surface of an inner race ring (7a) mounted on the smaller diameter shaft portion (1b) respectively. A base-end portion of the larger diameter portion (1a) of the stepped-diameter shaft (1) is fixedly mounted on a base member (10) of the motor, at right angles, to permit the shaft (1) to extend upward. The compound bearing assembly is also fixedly mounted in a central hub portion (12) of a rotor (11) of the motor, allowing the motor manufacturer to assemble the motor easily and highly accurately.

## Description

The present invention relates to an electric drive motor with a compound bearing assembly used in rotating portions of a computer and its peripheral devices.

In the motor used in the computer and its peripheral devices, the bearing assembly is mounted between a motor shaft and a hub portion of a rotor.

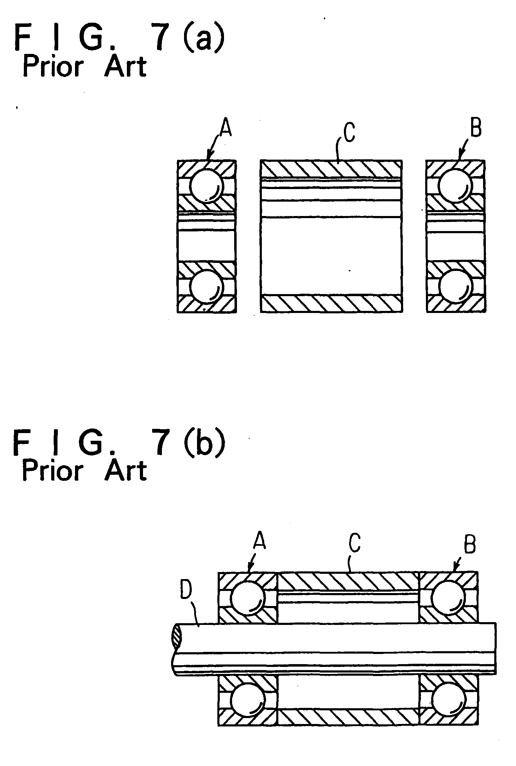

In a conventional compound bearing assembly, as shown in Fig. 7(a), a pair of conventional ball bearing units A,B and a sleeve-like spacer C are separately produced and delivered to a user such as a motor manufacturer who in turn mounts these delivered components A, B, C on a motor shaft D of an electrical drive motor to assemble a compound bearing assembly, as shown in Fig. 7(b).

As described above, in a conventional bearing assembly, it is necessary for the user or customer, such as the manufacturer or assembler of the computers or peripheral devices, to mount a pair of conventional ball bearing units A, B and a spacer C on the motor shaft D with the ball bearing units A, B spaced apart from each other by the spacer C. Consequently, the conventional bearing assembly suffers from the following problems:
(a) while it needs to provide sufficient rigidity, the motor shaft D is also required to have an outer diameter which is small enough to cooperate with the inner race rings of the ball bearing units A, B;
(b) Since the spacer C is a separate component independent of the pair of ball bearing units A and B, it is necessary for the opposite end surfaces of the spacer C to be machined or otherwise worked to improve their mutual parallelism and also their flatness, in relation to the dimensions of the ball bearing units A, B being assembled together with the spacer C;
(c) Since the spacer C is merely sandwiched between the race rings of the two ball bearing units A and B, it is necessary for the user to coaxially mount the spacer C on the motor shaft D with a high degree of accuracy. Also the user must ensure that the axially opposite end surfaces of the spacer C are brought into contact with the corresponding axially inward end surfaces of the outer race rings uniformly, which involves the user in cumbersome machining and assembling works; and
(d) Unless all the above requirements are fulfilled, the motor suffers from vibrations, and therefore performs poorly.

It is an object of the present invention to solve the above problems by providing an electric drive motor with a compound bearing assembly in which a plurality of components of the bearing assembly are already assembled to release the user of the bearing assembly (i.e. motor manufacturers) from its cumbersome assembling work, which enables the user to provide a high-performance electric drive motor.

According to a first aspect of the present invention there is provided:
an electric drive motor with a compound bearing assembly comprising:
a stepped-diameter shaft provided with a large-diameter portion, a small-diameter portion and an annular inner raceway groove directly formed in an outer peripheral surface of the large-diameter portion,
the small-diameter portion being fitted in an annular inner race ring in an insertion manner;
an elongated sleeve-like outer race ring partially covering the stepped-diameter shaft and provided with a single-piece first short outer race ring in one of its axially opposed end portions the other of which has its inner peripheral surface directly formed into an annular outer raceway groove;
a plurality of first balls rotatably mounted in the inner raceway groove of the large-diameter portion of the stepped-diameter shaft and held therein by an annular outer raceway groove of the first short outer race ring;
a plurality of second balls rotatably mounted in an annular inner raceway groove formed in an outer peripheral surface of the inner race ring, the second balls being held therein by an annular outer raceway groove directly formed in an inner peripheral surface of the sleeve-like outer race ring;
   whereby the compound bearing assembly is assembled from the above-enumerated components;
the compound bearing assembly having a base-end portion of the large-diameter portion thereof fixedly mounted on a base member of a motor substantially at right angles, to permit the stepped-diameter shaft to extend upward; and
the compound bearing assembly being fixedly mounted in a central hub portion of a rotor of the motor in an insertion manner to complete the motor provided with the compound bearing assembly.

According to a second aspect of the present invention there is provided:
an electric drive motor with a compound bearing assembly comprising:
a stepped-diameter shaft provided with a large-diameter portion, a small-diameter portion and an annular inner raceway groove directly formed in an outer peripheral surface of the large-diameter portion, the small-diameter portion being fitted in an annular inner race ring in an insertion manner;
an elongated sleeve-like outer race ring partially covering the stepped-diameter shaft and provided with a single-piece first short outer race ring in one of its axially opposite end portions the other of which has its inner peripheral surface directly formed into an annular outer raceway groove;
a plurality of first balls rotatably mounted in the inner raceway groove of the large-diameter portion of the stepped-diameter shaft and held therein by an annular outer raceway groove formed in an inner peripheral surface of the sleeve-like outer race ring;
a plurality of second balls rotatably mounted in an annular inner raceway groove formed in an outer peripheral surface of the inner race ring, the second balls being held therein by an annular outer raceway groove formed in an inner peripheral surface of a second short outer ring;
   whereby the compound bearing assembly is assembled from the above-enumerated components;
the compound bearing assembly having a base-end portion of the large-diameter portion thereof fixedly mounted on a base member of a motor at right angles to permit the stepped-diameter shaft to extend upward; and
the compound bearing assembly being fixedly mounted in a central hub portion of a rotor of the motor in an insertion manner to complete the motor provided with the compound bearing assembly.

According to a third aspect of the present invention there is provided:
an electric drive motor with a compound bearing assembly characterized in that:
an annular inner raceway groove is directly formed in an outer peripheral surface of a large-diameter portion of a stepped-diameter shaft provided with the large-diameter portion and a small-diameter portion;
a plurality of first balls are rotatably mounted between the inner raceway groove and an annular outer raceway groove formed in an inner peripheral surface of a first short outer race ring disposed over the large-diameter portion of the stepped-diameter shaft;
a plurality of second balls are rotatably mounted between the inner race ring and a second short outer race ring in a ball bearing unit;
a sleeve-like spacer is sandwiched between the second short outer race ring and the first short outer race ring over the large-diameter portion of the stepped-diameter shaft;
the inner race ring of the ball bearing unit is fixedly mounted on the small-diameter portion of the stepped-diameter shaft in an insertion manner;
   whereby a compound bearing assembly is assembled;
the compound bearing assembly has a base-end portion of the large-diameter portion of the stepped-diameter shaft fixedly mounted on a base member of a motor at right angles to permit the stepped-diameter shaft to extend upward; and
the compound bearing assembly is fixedly mounted in a central hub portion of a rotor of the motor in an insertion manner to complete an electric drive motor with the compound bearing assembly.

Incidentally, in the compound bearing assembly of the motor according to the first aspect of the present invention, an outer diameter of the inner race ring fixedly mounted on the small-diameter portion of the stepped-diameter shaft is equal to that of the large-diameter portion of the stepped-diameter shaft so that all the first and the second balls are the same in diameter.

Further, in the compound bearing assembly of the motor according to the second and the third aspect of the present invention, an outer diameter of the inner race ring of the ball bearing unit is equal to that of the large-diameter portion of the stepped-diameter shaft, while an outer and an inner diameter of the outer race ring of the ball bearing unit are equal to those of the sleeve-like outer race ring, respectively. Consequently, all the first and the second balls are the same in diameter.

Embodiments of the present invention will now be described, by way of example, with reference to the accompanying drawings, in which:
Fig. 1 is a sectional side view of an electric drive motor, of an outer-rotor type, with a compound bearing assembly in accordance with the present invention;
Fig. 2 is a sectional side view of an electric drive motor, of the outer-rotor type, with a compound bearing assembly in accordance with the present invention,
Fig. 3 is a sectional side view of yet another electric drive motor, of the outer-rotor type, with a compound bearing assembly in accordance with the present invention,
Fig. 4 is a sectional side view of an electric drive motor of an inner-rotor type, with a compound bearing assembly in accordance with the present invention,
Fig. 5 is a sectional side view of another electric drive motor, of the inner-rotor type, with a compound bearing assembly in accordance with the present invention,
Fig. 6 is a sectional side view of yet another electric drive motor, of the inner-rotor type, with a compound bearing assembly in accordance with the present invention;
Fig. 7(a) is a sectional side view of a conventional compound bearing assembly prior to assembly, illustrating separated ball bearing units and a spacer; and
Fig. 7(b) is a longitudinal sectional view of the conventional bearing assembly of Fig. 7(a) after assembly, illustrating the ball bearing units and the spacer thus assembled on the motor shaft.

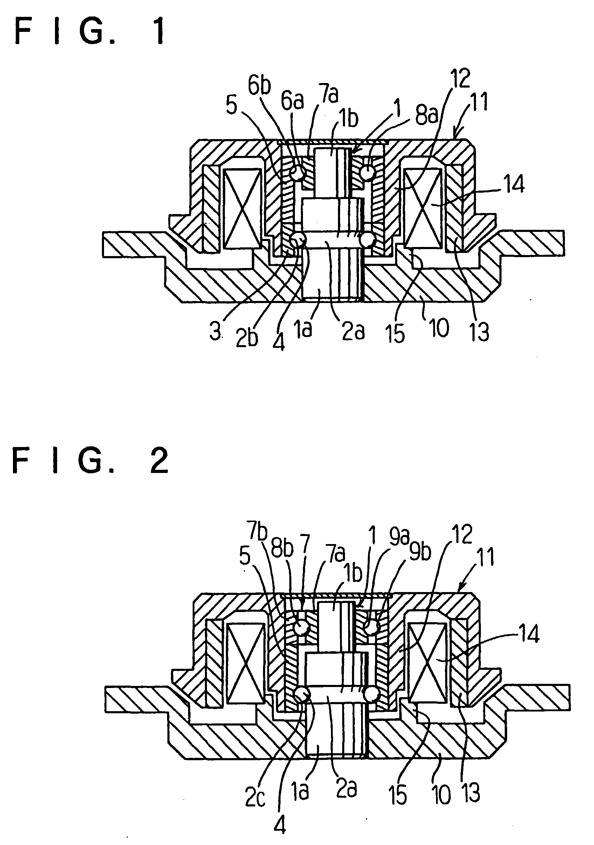

In Fig. 1: a stepped-diameter shaft 1 is provided with a relatively larger-diameter portion 1a and a relatively smaller-diameter portion 1b. An annular inner raceway groove 2a is formed in the outer peripheral surface of the larger-diameter portion 1a.

An annular outer raceway groove 2b is formed in the inner peripheral surface of a first short outer race ring 3. The first short outer race ring 3 is disposed on the larger-diameter portion 1a of the shaft 1, so that a plurality of first balls 4 may be rotatably mounted between the outer raceway groove 2b of the race ring 3 and the inner raceway groove 2a of the shaft 1.

A sleeve-like outer race ring 5 is disposed around the shaft 1. An annular outer raceway groove 6b is formed in the inner peripheral surface of an upper-end portion of the outer race ring 5. A plurality of second balls 8a are rotatably mounted between this outer raceway groove 6b and an annular inner raceway groove 6a formed in the outer peripheral surface of an inner race ring 7a which is fixedly mounted on the smaller-diameter portion 1b of the stepped-diameter shaft 1 in an insertion manner.

Further, as is clear from Fig. 1, the outer diameter of the inner race ring 7a is substantially equal to that of the large-diameter portion 1a of the shaft 1, thus permitting the first and the second balls 4 and 8a to be of the same diameter.

In one method of assembling this motor, the inner race ring 7a is initially slidably mounted on the small-diameter portion 1b of the shaft 1 in an insertion manner, that is the portion 1b is inserted into the race ring 7a. Then, a predetermined pre-load is applied to an upper-end surface of the thus mounted inner race ring 7a. Under such circumstances, the inner race ring 7a is fixed to the small-diameter portion 1b of the shaft 1 by means of a suitable connecting means, such as an adhesive. Thus the inner race ring 7a, first short outer race ring 3 and the sleeve-like outer race ring 5 are successively mounted on the shaft 1 to complete the compound bearing assembly.

Then, a base-end portion of the large-diameter portion 1a of the shaft 1 is fixedly mounted in a base member 10 of the motor, at right angles, to permit the shaft 1 to extend upward from the base member 10 of the motor. Thus the outer race rings 3 and 5 are firmly fitted in a central hub portion 12 of a rotor 11 of the motor, in an insertion manner, thus completing the electric drive motor with the compound bearing assembly.

Incidentally, the motor of Fig. 1 also comprises a permanent magnet 13; an electric energizing coil 14, wound around a stator yoke (not shown) of the motor; and a yoke holder 15.

Fig. 2 shows a second embodiment of an outer rotor type motor in accordance with the present invention.

In this second embodiment, the annular inner raceway groove 2a is formed in the outer peripheral surface of the large-diameter portion 1a of the shaft 1, as in the first embodiment.

An annular outer raceway groove 2c is formed in the inner peripheral surface of the lower-end portion of the sleeve-like outer race ring 5, which is disposed around the shaft 1. A plurality of the first balls 4 are rotatably mounted between this outer raceway groove 2c and the inner raceway groove 2a of the larger-diameter portion 1a of the shaft 1.

A conventional ball bearing unit 7 is provided , which comprises an inner race ring 7a, a second short outer race ring 7b and a plurality of third balls 8b which are rotatably mounted between these race rings 7a, 7b. The inner race ring 7a is again fixedly mounted on the smaller-diameter portion 1b of the shaft 1, in an insertion manner.

Further, the outer diameter of the inner race ring 7a and the diameter of the larger-diameter portion 1a of the shaft 1 are equal. Also, the outer and inner diameters of the second short outer race ring 7b are equal to those of the sleeve-like outer race ring 5, respectively. Consequently, all the balls 4 and 8b may be of the same diameter.

In one method of assembling this second embodiment, the inner race ring 7a is initially slidably mounted on the small-diameter portion 1b of the shaft 1 in an insertion manner as with the first embodiment. Then the upper-end surface of the race ring 7a is subjected to a predetermined pre-load. Under such circumstances, the inner race ring 7a is fixed to the small-diameter portion 1b of the shaft 1 by means of a suitable connecting means such as an adhesive. Thus the inner race ring 7a, sleeve-like outer race ring 5 and the second short outer race ring 7b are successively mounted on the shaft 1 thus completing the compound bearing assembly.

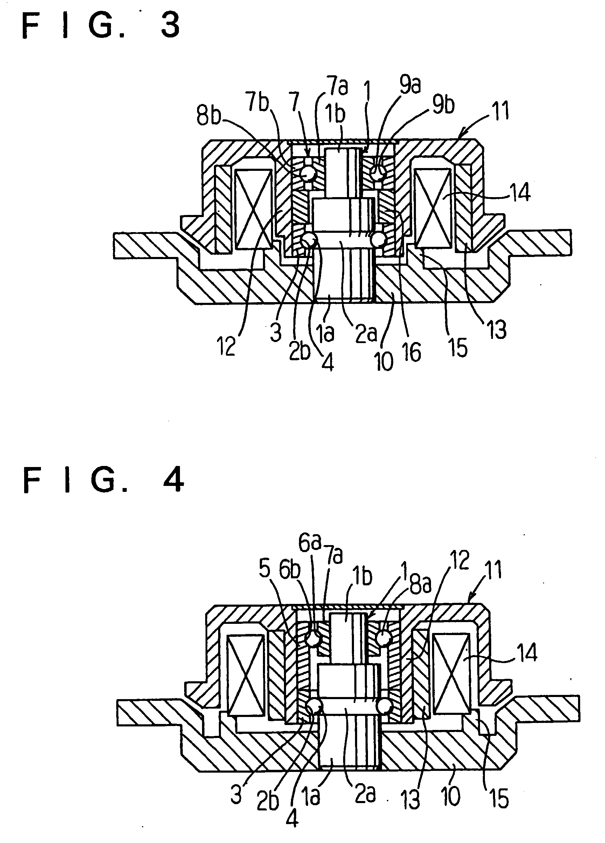

Fig. 3 shows a third embodiment of an outer-rotor type motor in accordance with the present invention.

In this third embodiment, the inner raceway groove 2a is directly formed in the outer peripheral surface of the large-diameter portion 1a of the stepped-diameter shaft 1.

The first short outer race ring 3 is disposed on the larger-diameter portion 1a of the shaft 1 and has its inner peripheral surface formed into an annular outer raceway groove 2b. A plurality of second balls 4 are rotatably mounted between this outer raceway groove 2b and the inner raceway groove 2a of the large-diameter portion 1a of the shaft 1.

A conventional ball bearing unit 7, comprising an inner race ring 7a, second short outer race ring 7b and third balls 8b, is provided with its inner race ring 7a fixedly mounted on the small-diameter portion 1b of the shaft 1, in an insertion manner.

A short sleeve 16 is coaxially disposed around the shaft 1, and fixedly connected between the first short outer race ring 3 and the second shorter outer race ring 7b of the ball bearing unit 7.

in this third embodiment, as in the second embodiment shown in Fig. 2, the outer diameter of the inner race ring 7a and the diameter of the large-diameter portion 1a of the shaft 1 are equal. Also the inner and outer diameters of the second short outer race ring 7b of the ball bearing unit 7 are equal to those of the first short outer race ring 3 disposed around the large-diameter portion 1a of the shaft 1. Consequently, all the balls 4 and 8b are again the same size.

In one method of assembling this third embodiment of the present invention, the inner race ring 7a is initially slidably mounted on the small-diameter portion 1b of the shaft 1, in an insertion manner. Then its upper-end surface is subjected to a predetermined pre-load. Under such circumstances, the inner race ring 7a is fixed to the small-diameter portion 1b of the shaft 1 by suitable connecting means such as an adhesive. Thus the inner race ring 7a, first short outer race ring 3, short sleeve 16 and the second short outer race ring 7b are successively mounted on the shaft 1, thus competing the compound bearing assembly.

Incidentally, the ball bearing unit 7 shown in Fig. 3 also comprises annular inner and annular outer raceway grooves 9a and 9b. The third balls 8b may be rotatably held in a conventional ball retainer (not shown).

In the first, second and the third embodiment of the present invention described above, although all the balls 4, 8a, 8b may have the same diameter, it is also possible for the balls to be of any other suitable sizes. For example, the balls used in the large-diameter portion 1a of the shaft 1 may be different in diameter from those used in the small-diameter portion 1b of the shaft 1.

The above description relates to outer-rotor type motors in accordance with the present invention, as shown in Figs. 1 to 3, while the following description relates to a plurality of embodiments of inner-rotor type motors in accordance with the present invention, as shown in Figs. 4 to 6.

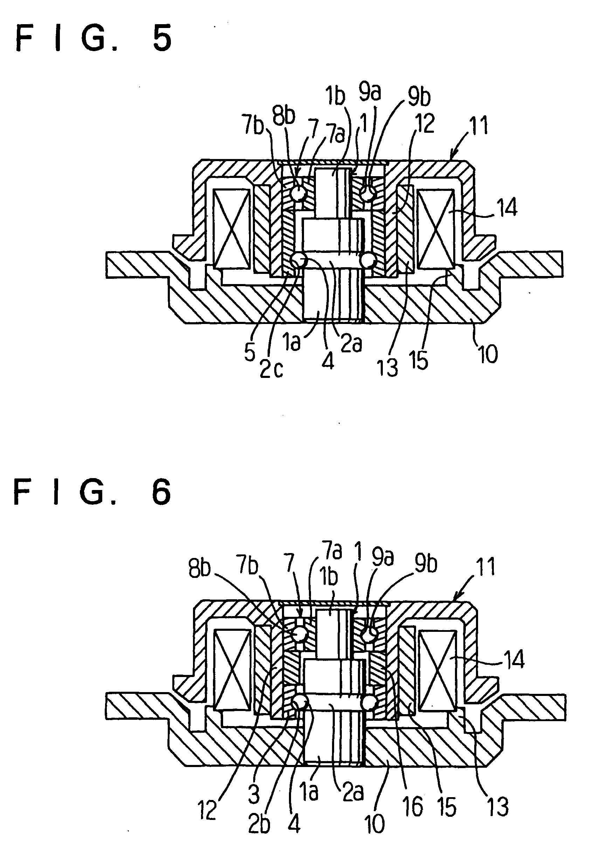

In each of the inner-rotor type motors in accordance with the present invention, a permanent magnet 13 is fixedly mounted on another peripheral surface of a central hub portion 12 of a rotor 11 of the motor. The remaining construction is substantially the same as that of each of the embodiments shown in Figs. 1 to 3. More particularly, as for the remaining construction, a fourth embodiment of the present invention shown in Fig. 4 corresponds to the first embodiment shown in Fig. 1; a fifth embodiment of the present invention shown in Fig. 5 corresponds to the second embodiment shown in Fig. 2; and a sixth embodiment of the present invention shown in Fig. 6 corresponds to the third embodiment shown in Fig. 3.

In electric drive motors in accordance with the present invention, since the compound bearing assemblies thereof have the above construction, the following actions and effects are obtained:
(1) In a motor in accordance with the present invention, since substantially all of the components of the compound bearing assembly, for example, the outer race rings, inner race ring, balls and sleeve have already been assembled into the compound bearing assembly by a bearing manufacturer with a high degree of accuracy, the user or motor manufacturer is relieved of a cumbersome assembly task in assembling the compound bering assembly. The assembly is easily mounted inside a sleeve-like rotating element (i.e. central hub portion 12 of the rotor 11 of the motor) by inserting the assembly into the rotating element and fixing the assembly therein at the user's end;
(2) Since the compound bearing assembly used in a motor in accordance with the present invention uses a stepped-diameter shaft 1 provided with a relatively larger-diameter portion 1a which has an annular inner raceway groove 2a directly formed in its outer peripheral surface, it is possible for the compound bearing assembly to do without the conventional inner race ring in the large-diameter portion 1a of the stepped-diameter shaft 1. This permits the shaft 1 to be partially increased in diameter, and therefore increases the rigidity of the shaft.
(3) Since the stepped-diameter shaft 1 is provided with a relatively larger-diameter portion 1a with correspondingly increases rigidity, it is possible to increase the resonance point of an electric drive motor in accordance with the present invention so that such a motor may be prevented from resonating or causing resonance in the remaining components of the motor. Thus the performance and reliability of the motor is improved.
(4) The number of the conventional ball bearing units used in the motor is reduced to one, i.e. the ball bearing unit 7. Consequently, the compound bearing assembly in the motor uses only one inner race ring 7a. Therefore, the number of its components is reduced in comparison with conventional bearing assemblies; and
(5) Since the annular inner raceway groove 2a is directly formed in the outer peripheral surface of the larger-diameter portion 1a of the shaft 1, no inner race ring is required in the large-diameter portion 1a of the shaft 1. This enables the outer diameter of the first short outer race ring 3, the sleeve-like outer race ring 5 and the spacer 16 to be reduced in size and, therefore, enabling the size of the motor to be reduced, so as to meet the needs of industry.

## Claims

1. An electric drive motor with a compound bearing assembly characterized in that:
an annular inner raceway groove (2a) is formed directly in the outer peripheral surface of a first portion (1a) of a stepped-diameter shaft (1), in which said first portion (1a) is larger than a second portion (1b) of said shaft (1);
a plurality of first balls (4) are rotatably mounted between said inner raceway groove (2a) and an annular outer raceway groove (2b) formed in the inner peripheral surface of a first short outer race ring (3) disposed over said large-diameter portion (1a) of said stepped-diameter shaft (1);
a plurality of second balls (8b) are rotatably mounted between said inner race ring (7a) and a second short outer race ring (7b) in a ball bearing unit (7);
a sleeve-like spacer (16) is connected between said second short outer race ring (7b) and said first short outer race ring (3) over said large-diameter portion (1a) of said stepped-diameter shaft (1);
said inner race ring (7a) of said ball bearing unit (7) is fixedly mounted on said small-diameter portion (1b) of said stepped-diameter shaft (1);
whereby a compound bearing assembly is assembled;
said compound bearing assembly having a base-end portion of said large-diameter portion (1a) of said stepped-diameter shaft (1) fixedly mounted on a base member (10) of a motor at right angles to permit said stepped-diameter shaft (1) to extend upward; and
said component bearing assembly being fixedly mounted in a central hub portion (12) of a rotor (11) of said motor.
